# EUROPÄISCHE PATENTANMELDUNG

(11) **EP 3 428 307 A1**
(43) Veröffentlichungstag der Anmeldung: **16.01.2019**
(21) Anmeldenummer: 18181070.6
(22) Anmeldetag: 02.07.2018
(51) Int. Cl.: C23C 8/24, C23C 8/30, C23C 8/34, C23C 8/80, F16B 25/00, F16B 33/00, F16B 33/06

(54) **BETONSCHRAUBE**

(30) Priorität: 10.07.2017 DE 102017115426
(71) Anmelder: fischerwerke GmbH & Co. KG, 72178 Waldachtal (DE)
(72) Erfinder: Essig, Simon, 72178 Waldachtal (DE); Schilling, Sebastian, 72250 Freudenstadt (DE)
(74) Vertreter: Suchy, Ulrich Johannes

(57) **Zusammenfassung**

Die Erfindung betrifft eine Schraube (1) mit einem Gewinde (2), das bei einem Eindrehen in ein Loch in Beton ein Gegengewinde in den Beton schneidet (sogenannte Betonschraube). Die Erfindung schlägt vor, die Schraube (1) aus einem Duplexstahl herzustellen, das Gewinde (2) zu walzen und dadurch die Oberfläche zu härten, zusätzlich die Oberfläche durch eine thermochemische Wärmebehandlung wie Aufkohlen oder Carbonitrieren zu härten, und eine Verschleißschutzschicht aus beispielsweise Molybdänoxid oder Wolframcarbid durch Flamm- oder Plasmaspritzen aufzubringen.

## Beschreibung

Die Erfindung betrifft eine Schraube mit den Merkmalen des Oberbegriffs des Anspruchs 1. Insbesondere ist die erfindungsgemäße Schraube eine sogenannte Betonschraube, die bei einem Eindrehen in ein vorgebohrtes oder in anderer Weise hergestelltes Loch in beispielsweise Beton ein Gegengewinde selbst schneidet.

Grundsätzlich bestehen insbesondere für Anwendungen im Außenbereich drei Grundanforderungen an Betonschrauben: Sie sollen oder müssen korrosionsbeständig sein, sie müssen eine zum Eindrehen in ein Loch und Gewindeschneiden in dem Loch in Beton ausreichende mechanische Festigkeit, und eine zum Gewindeschneiden in Beton ausreichende Härte zumindest in einem in einer Eindrehrichtung vorderen Bereich eines Gewindes, der das Gegengewinde in den Beton schneidet, aufweisen.

Dafür gibt es verschiedene Lösungsansätze: eine Möglichkeit sind Hartmetallschneiden, die vergleichbar hartmetallbestückten Werkzeugen in einen Gewindegang eines Gewindes einer Betonschraube gelötet sind.

Ein anderer Lösungsansatz ist eine Betonschraube mit einem zweiteiligen Schaft, dessen beide Schaftteile durch Reibschweißen verbunden sind. Beide Schaftteile weisen einen ohne Versatz ineinander übergehenden Gewindegang auf. Ein in Eindrehrichtung vorderer Schaftteil besteht aus Hartmetall. Beide Lösungsansätze sind jedoch sehr aufwändig im Produktionsprozess.

Ein weiterer Lösungsansatz ist eine Betonschraube aus einem korrosionsbeständigen Stahl, dessen Gewindeoberflächen gehärtet sind. Problem hierbei ist die Auswahl eines Stahls, der korrosionsbeständig ist, eine ausreichende mechanische Festigkeit aufweist, der zum Gewindeschneiden in Beton ausreichende oberflächenhärtbar ist, und dabei seine mechanische Festigkeit weder verliert noch versprödet.

Zu einem Gewindeschneiden in Beton wird wegen in Beton enthaltener Kiesel eine Oberflächenhärte von mindestens 55 HRC (Oberflächenhärte nach Rockwell) als notwendig angesehen. Diese Oberflächenhärte braucht nur in den Teilen eines Gewindes einer Betonschraube vorhanden sein, die das Gegengewinde in den Beton schneiden, also insbesondere in einem in einer Eindrehrichtung vorderen Bereich des Gewindes bzw. eines Gewindegangs.

Aufgabe der Erfindung ist, eine als Betonschraube geeignete Schraube vorzuschlagen.

Diese Aufgabe wird erfindungsgemäß durch die Merkmale des Anspruchs 1 gelöst. Die erfindungsgemäße Schraube besteht insgesamt oder jedenfalls in einem Bereich, in dem sie ein Gewinde aufweist, aus einem Duplexstahl. Es genügt an sich, wenn ein Schaft der Schraube in einem Bereich, in dem das Gewinde der Schraube bei einem Eindrehen in ein Loch ein Gegengewinde schneidet, aus Duplexstahl besteht. Ein Duplexstahl weist ein zweiphasiges Gefüge aus einer Ferritmatrix mit Inseln aus Austenit auf. Duplexstähle weisen eine gute Korrosions- und Säurebeständigkeit auf, weisen eine höhere mechanische Festigkeit als viele rostfreie Chrom-Nickel-Stähle und eine höhere Duktilität als rostfreie Chromstähle auf. Außerdem lassen sie sich ausreichend oberflächenhärten, wie nachfolgend erfindungsgemäß beschrieben, ohne ihre mechanische Festigkeit und Duktiltät zu verlieren bzw. weisen nach einem Oberflächenhärten eine zum Selbstschneiden eines Gegengewindes in Beton ausreichende mechanische Festigkeit und Duktiltät auf. Maßgeblich für die Erfindung ist, dass der Schaft der Schraube zumindest in dem Bereich, in dem ihr Gewinde ein Gegengewinde schneidet, aus einem Duplexstahl besteht.

Das Gewinde der erfindungsgemäßen Schraube ist durch Umformen hergestellt, wodurch das Gewinde bzw. die Schraube im Bereich des Gewindes oberflächengehärtet ist.

Zusätzlich ist die Schraube im Bereich des Gewindes durch eine thermochemische Wärmebehandlung oberflächengehärtet. Die thermochemische Wärmebehandlung ist beispielsweise ein Nitrieren, Aufkohlen, Carbonitrieren, Nitrocarburieren oder Borieren. Es genügt an sich, wenn ein Teil des Gewindes, der beim Eindrehen in ein Loch ein Gegengewinde schneidet, durch thermochemische Wärmebehandlung oberflächengehärtet ist.

Zusätzlich zu der mechanischen Oberflächenhärtung durch Umformen und der Oberflächenhärtung durch thermochemische Wärmebehandlung ist eine Verschleißschutzschicht durch thermische Beschichtung wie Flammspritzen oder Plasmaspritzen auf das Gewinde oder zumindest auf einen Teil des Gewindes, der beim Eindrehen in ein Loch ein Gegengewinde schneidet, aufgebracht. Die thermisch aufgebrachte Verschleißschutzschicht weist beispielsweise Molybdänoxid, Wolframcarbid und/oder Hartchrom auf. Dabei ist unter "Hartchrom" eine Chromschicht mit einer wesentlich größeren Dicke als Glanzchrom gemeint, das heißt mit einer Schichtdicke von mindestens 15 µm, vorzugsweise mindestens 60 µm oder 150 µm oder über 250 µm bis ungefähr 500 µm. Eine Verschleißschutzschicht ohne Hartchrom weist vorzugsweise eine Dicke von mindestens 20 µm auf.

In bevorzugter Ausgestaltung der Erfindung weist die Schraube einen Schraubenkopf auf, ist aus einem Stück hergestellt und/oder besteht vollständig aus Duplexstahl.

Die Erfindung wird nachfolgend anhand eines in der Zeichnung dargestellten Ausführungsbeispiels näher erläutert. Es zeigen:
- Figur 1: eine erfindungsgemäße Schraube in Ansicht; und
- Figur 2: einen Schnitt eines Gewindegangs der Schraube aus Figur 1.

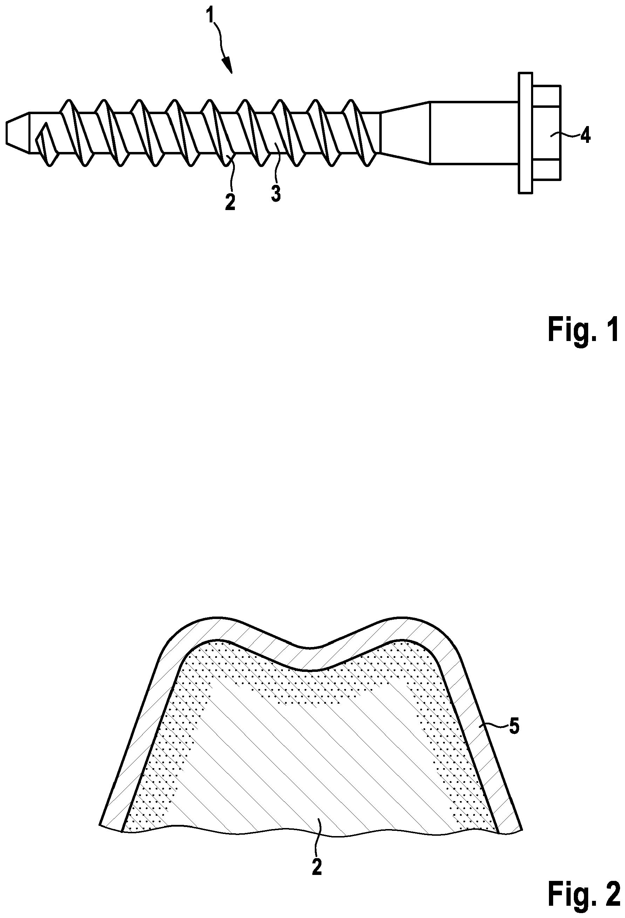

Die in Figur 1 dargestellte, erfindungsgemäße Schraube 1 ist eine sogenannte Betonschraube, die bei einem Eindrehen in ein vorgebohrtes oder in anderer Weise hergestelltes, nicht dargestelltes Loch in beispielsweise Beton ein Gegengewinde selbst schneidet. Ein Durchmesser des Lochs sollte größer als ein Kerndurchmesser eines Gewindes 2 der Schraube 1, und muss kleiner als ein Außendurchmesser des Gewindes 2 sein.

Die Schraube 1 ist in einem Stück aus einem Walzdraht (Runddraht) aus einem Duplexstahl hergestellt. Durch Umformen wie beispielsweise Durchziehen wird eine Festigkeit des Duplexstahls um beispielsweise etwa 50 % von beispielsweise etwa 700 N/mm² auf beispielsweise etwa 1050 N/mm² erhöht. Ein Schraubenkopf 4 wird durch Umformen, nämlich Stauchen, an einem Ende angeformt.

Der gezogene Walzdraht bildet einen Schaft 3 der Schraube 1, an dem das Gewinde 2 durch Gewindewalzen hergestellt ist, also durch ein Umformverfahren, das die Festigkeit an der Oberfläche erhöht, das heißt eine Oberfläche des Gewindes 2 härtet. Die mechanische Oberflächenhärtung des Gewindes 2 der erfindungsgemäßen Schraube 1 ist in Figur 2 durch eine engere Schraffur angedeutet. Figur 2 zeigt einen Querschnitt eines Gewindegangs des Gewindes 2 im Bereich eines Gewindekopfes, also in einem radial äußeren Bereich des Gewindes 2. Der Querschnitt des Gewindegangs befindet sich in einer Axialebene der Schraube 1.

Zusätzlich ist die Oberfläche des Gewindes 2 bis zu einer Tiefe von 250 µm oder mehr durch eine thermochemische Wärmebehandlung wie Nitrieren, Salzbadnitrieren, Gasnitrieren, Aufkohlen, Carbonitrieren, Nitrocarburieren oder Borieren gehärtet. Die Oberflächenhärtung durch die thermochemische Wärmebehandlung ist in Figur 2 durch eine Punktschraffur angedeutet. Die mechanische Oberflächenhärtung kann tiefer als, gleich tief wie oder weniger tief als die Oberflächenhärtung durch die thermochemische Wärmebehandlung reichen. Die Tiefen der Oberflächenhärtungen sind in Figur 2 ebenso wie eine Dicke einer Verschleißschutzschicht 5 nicht maßstäblich, sondern stark übertrieben gezeichnet.

Auf die mechanisch durch Umformen, im Ausführungsbeispiel durch Gewindewalzen und zusätzlich durch thermochemische Wärmebehandlung gehärtete Oberfläche des Gewindes 2 ist die Verschleißschutzschicht 5 durch eine thermische Beschichtung wie Flammspritzen oder Plasmaspritzen aufgebracht. Die Verschleißschutzschicht 5 weist Molybdänoxid, Wolframcarbid oder Hartchrom auf oder besteht aus diesen Werkstoffen. Die Verschleißschutzschicht 5 ist mindestens 20 µm dick. Unter Hartchrom ist eine Chromschicht mit einer Dicke von mindestens etwa 60 µm bis etwa 150 µm und vorzugsweise von mindestens etwa 250 µm bis etwa 500 µm oder mehr zu verstehen.

Für ein Gewindeschneiden in Beton wird eine Oberflächenhärte von mindestens 55 HRC (Härte nach Rockwell) als notwendig angesehen. Im Ausführungsbeispiel weist die Verschleißschutzschicht 5 eine Härte von über 60 HRC und insbesondere bis zu etwa 70 HRC auf, was ausreichend zum Gewindeschneiden in Beton ist. Durch das Gewindewalzen weist das Gewinde 2 der Schraube 1 unter der Verschleißschutzschicht 5 zunächst eine Härte an der Oberfläche von etwa 50 HRC auf, die durch die thermochemische Wärmebehandlung auf etwa 55 bis 60 HRC erhöht ist.

### Bezuqszeichenliste

### Schraube

- 1: Schraube
- 2: Gewinde
- 3: Schaft
- 4: Schraubenkopf
- 5: Verschleißschutzschicht

## Patentansprüche

1. Schraube mit einem ein Gewinde (2) aufweisenden Schaft (3), wobei der Schaft (3) in einem Bereich, in dem er das Gewinde (2) aufweist, aus einem Duplexstahl besteht, das Gewinde (2) durch Umformen hergestellt und die Schraube (1) dadurch im Bereich des Gewindes (2) oberflächengehärtet ist, die Schraube (1) zusätzlich durch thermochemische Wärmebehandlung im Bereich des Gewindes (2) oberflächengehärtet ist und außerdem eine Verschleißschutzschicht (5) auf das Gewinde (2) aufgebracht ist.

2. Schraube nach Anspruch, **dadurch gekennzeichnet, dass** die Schraube (1) zur thermochemischen Wärmebehandlung im Bereich des Gewindes (2) nitriert, aufgekohlt, carbonitriert, nitrocarburiert und/oder boriert ist.

3. Schraube nach Anspruch 1 oder 2, **dadurch gekennzeichnet, dass** die Verschleißschutzschicht (5) durch thermische Beschichtung auf das Gewinde (2) aufgebracht ist.

4. Schraube nach Anspruch 3, **dadurch gekennzeichnet, dass** die Verschleißschutzschicht (5) durch Flammspritzen oder Plasmaspritzen auf das Gewinde (2) aufgebracht ist.

5. Schraube nach einem der vorhergehenden Ansprüche, **dadurch gekennzeichnet, dass** die Verschleißschutzschicht (5) Molybdänoxid und/oder Wolframcarbid und/oder Chrom aufweist.

6. Schraube nach einem der vorhergehenden Ansprüche, **dadurch gekennzeichnet, dass** die Verschleißschutzschicht (5) eine Dicke von mindestens 20 µm aufweist.

7. Schraube nach einem der vorhergehenden Ansprüche, **dadurch gekennzeichnet, dass** die Schraube (1) einen Schraubenkopf (4) aufweist und einstückig aus Duplexstahl besteht.
